# EUROPEAN PATENT APPLICATION

(11) **EP 1 414 095 A2**
(43) Date of publication of application: **28.04.2004**
(21) Application number: 03255963.5
(22) Date of filing: 23.09.2003
(51) Int. Cl.: H01M 8/24

(54) **Fuel cell having segmented anodes**

(30) Priority: 03.10.2002 US 264395
(71) Applicant: Hewlett-Packard Development Company, L.P., Houston, TX 77070 (US)
(72) Inventor: Champion, David, Lebanon, OR 97335 (US); Beatty, Christopher C., Albany, OR 97321 (US)
(74) Representative: Jackson, Richard Eric

(57) **Abstract**

In one of many possible embodiments, the present invention provides a fuel cell system including a fuel cell (40) having a plurality of segmented anodes (20), each segmented anode (20) measuring a minimal length sufficient to substantially consume or catalyze fuel introduced to the anode (20).

## Description

### FIELD OF THE INVENTION

This invention relates to fuel cells. More particularly, this invention relates a method and apparatus for a fuel cell fuel supply and exhaust manifold.

### BACKGROUND OF THE INVENTION

Over the past century the demand for energy has grown exponentially. With the growing demand for energy, many different energy sources have been explored and developed. One of the primary sources of energy has been, and continues to be, the combustion of hydrocarbons. However, the combustion of hydrocarbons is usually incomplete combustion and releases non-combustibles that contribute to both smog as well as other pollutants in varying amounts.

As a result of the pollutants created by the combustion of hydrocarbons, the desire for cleaner energy sources has increased in more recent years. With the increased interest in cleaner energy sources, fuel cells have become more popular and more sophisticated. Research and development on fuel cells has continued to the point where many speculate that fuel cells will soon compete with the gas turbine generating large amounts of electricity for cities, the internal combustion engine powering automobiles, and batteries that run a variety of small and large electronics.

Fuel cells conduct an electrochemical energy conversion of hydrogen and oxygen into electricity and heat. Fuel cells are similar to batteries, but they can be "recharged" while providing power.

Fuel cells provide a DC (direct current) voltage that may be used to power motors, lights, or any number of electrical appliances. There are several different types of fuel cells, each using a different chemistry. Fuel cells are usually classified by the type of electrolyte used. The fuel cell types are generally categorized into one of five groups: proton exchange membrane (PEM) fuel cells, alkaline fuel cells (AFC), phosphoric-acid fuel cells (PAFC), solid oxide fuel cells (SOFC), and molten carbonate fuel cells (MCFC).

Fuel cells typically include four basic elements: an anode, a cathode, an electrolyte, and a catalyst arranged on each side of the electrolyte. The anode is the negative post of the fuel cell and conducts electrons that are freed from hydrogen molecules such that the electrons can be used in an external circuit. The anode includes channels to disperse the fuel gas as evenly as possible over the surface of the catalyst.

The cathode is the positive post of the fuel cell, and typically includes channels etched therein to evenly distribute oxygen (usually air) to the surface of the catalyst. The cathode also conducts the electrons back from the external circuit to the catalyst, where they can recombine with the hydrogen ions and oxygen to form water.

In most fuel cells, the fuel gas that is directed to the anode utilizes only a small portion of the catalyst area. Accordingly, some of the fuel gas often passes through the fuel cell unconsumed. Further, the exhaust products from the catalytic reaction appear to remain in the catalyst area, requiring the fresh incoming fuel to compete with the exhaust to gain access to the catalyst.

The under-utilization of the catalyst area and the competition for the catalyst between the fresh fuel and the exhaust often result in poor fuel efficiency for the fuel cell. Some have compensated for the under-utilization of the catalyst area at the entrance by flooding the anode with fuel. However, such techniques exacerbate the efficiency problem because much of the fuel in such a flood situation passes through the fuel cell without being used.

### SUMMARY OF THE INVENTION

In one of many possible embodiments, the present invention provides a fuel cell system including a fuel cell having a plurality of segmented anodes, each segmented anode measuring a minimal length sufficient to substantially consume or catalyze fuel introduced to the anode.

### BRIEF DESCRIPTION OF THE DRAWINGS

The foregoing and other features and aspects of the invention will become further apparent upon reading the following detailed description and upon reference to the drawings in which:

FIG. 1 is a diagrammatical illustration of a fuel cell system according to one embodiment of the present invention.

FIG. 2 is a front view of fuel cell structure according to one embodiment of the present invention.

FIG. 2A is a top view a first layer of a fuel cell manifold according to one embodiment of the present invention.

FIG. 2B is a top view of a second layer of a fuel cell manifold according to one embodiment of the present invention.

FIG. 3 is front view of a combination multiple fuel cells according to one embodiment of the present invention.

FIG. 4 is a top view of a fuel cell manifold according to another embodiment of the present invention.

In the drawings, identical reference numbers indicate similar, but not necessarily identical, elements. While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF ILLUSTRATED EMBODIMENTS

lllustrative embodiments of the invention are described below. As will be appreciated by those skilled in the art, the present invention can be implemented in a wide variety of fuel cell applications including, but are not limited to, SOFCs, PEM fuel cells, AFCs, PAFCs, and MCFCs.

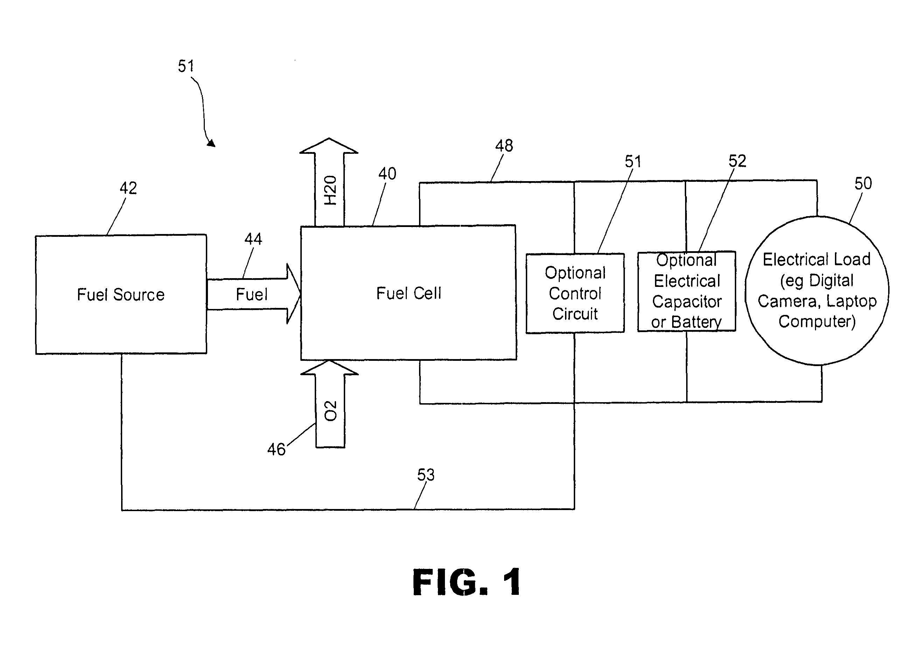

Turning now to the figures, and in particular to FIG. 1, an overview of an electronic device (51) using a fuel cell power system is shown according to one embodiment of the present invention. According to the embodiment of FIG. 1, there is a fuel cell (40) in fluid communication with a fuel source, (42). The fuel source (42) provides a supply of fuel along a path represented by an arrow (44). A supply of oxygen, which may be provided by ambient air, is also in fluid communication with the fuel cell (40) as represented by another arrow (46). As shown in FIG. 1, water (H₂O) may be produced as a byproduct of the operation of the fuel cell (40).

The fuel cell (40) may provide power via an external circuit (48) to an electrical load (50). The electrical load (50) may include any electrically operated device including, but not limited to, a motor, a light, a digital camera, a laptop computer, and other devices consuming electricity. The external circuit (48) may also be connected to an optional voltage regulator/control circuit (51) and an electrical capacitor or battery (52), which are shown in electrical parallel with the fuel cell (40). The optional voltage regulator/control circuit (51) may include a feedback loop (53) for providing data to the fuel source (42). The electrical capacitor or battery (52) may provide auxiliary power to the electrical load (50).

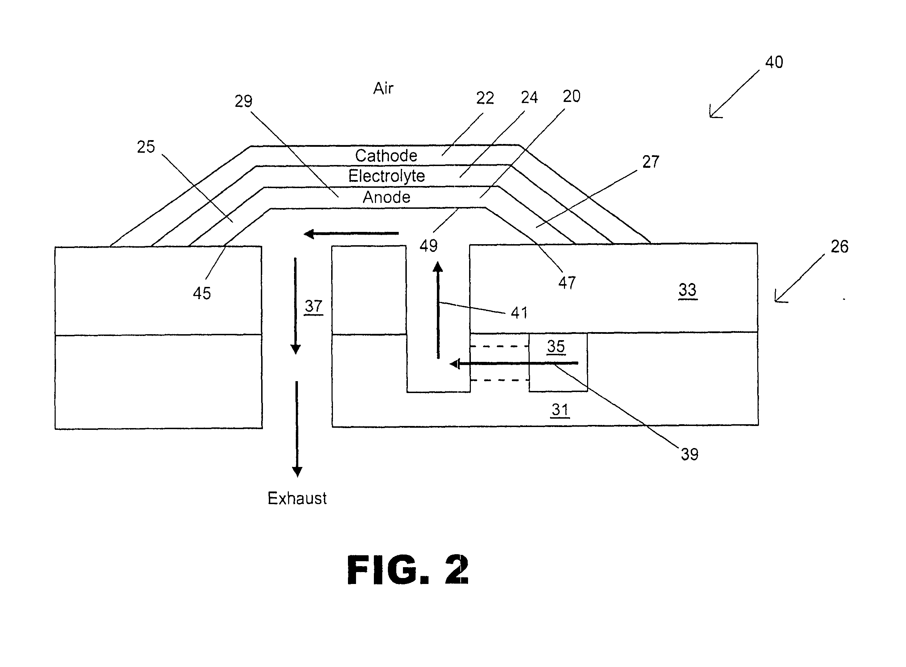

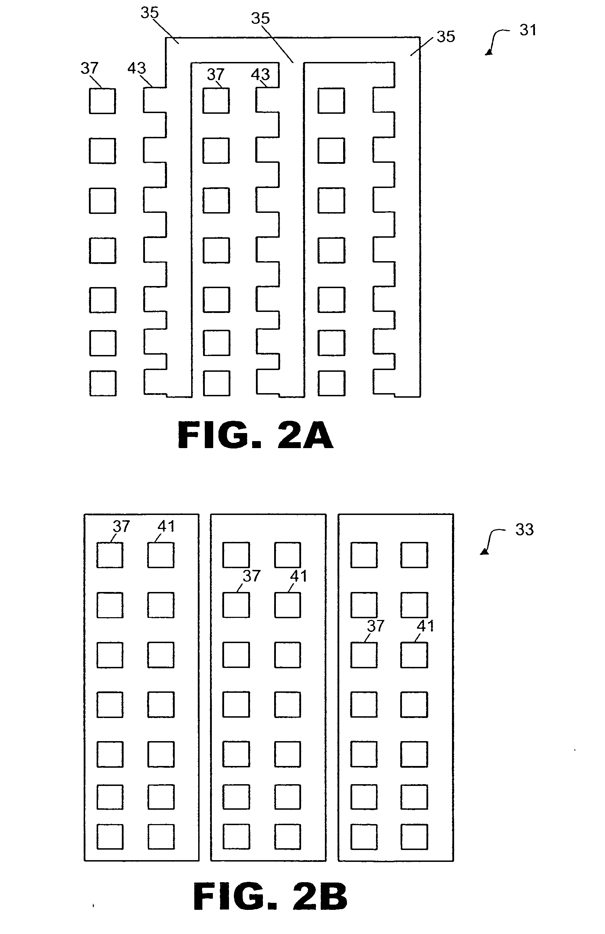

The fuel cell (40) may include a structure that enhances the utilization of a fuel cell anode catalyst. Turning next to FIG. 2, the fuel cell (40) structure according to one embodiment of the present invention is shown. According to the embodiment of FIG. 2, the fuel cell (40) may be a solid oxide fuel cell. SOFCs advantageously allow for the use of a variety of fuels (e.g., hydrogen, hydrocarbons, alcohols, etc.).

The fuel cell (40) includes four basic elements: an anode (20), a cathode (22), an electrolyte (24), and a manifold system (26). The anode or anode segments (20) and the cathode (22) are arranged on either side of the electrolyte (24). The anode (20) is the negative post of the fuel cell (40) and conducts electrons that are freed from the fuel to the external circuit (48, FIG. 1). The cathode (22) is the positive post of the fuel cell, and is exposed to an oxygen supply (usually near ambient air pressure). The cathode need not be segmented, but it can be if desired. The cathode (22) also conducts the electrons back from the external circuit, where they combine with molecular oxygen to form oxygen ions.

The electrolyte (24) of the present embodiment is a solid oxide membrane (24). The membrane (24) is typically a high temperature ceramic material that conducts only oxygen ions. This membrane (24) also prevents the passage of electrons.

In some embodiments, the anode (20) includes a ceramic/metal mixture (cermet) (e.g., yttria stabilized zirconia/nickel; samaria doped ceria/nickel, etc.). The anode (20) may also include other or alternative materials based on the particular fuel cell application. The anode (20) is porous so as to maximize the three-phase boundary. The three-phase boundary defines an edge at which the fuel (e.g. hydrogen), the anode (20), and the electrolyte (24) meet. The anode (20) may include the ceramic/metal mixtures mentioned above which act as a catalytic agent to facilitate the oxidation of the fuel.

The cathode (22) may include a composite mixture of an electrocatalyst and oxygen ion conductor (e.g., lanthanum strontium maganate/yttria stabilized zirconia, samarium strontium cobaltite/samaria doped ceria, etc.). The cathode (22) may be porous so as to maximize the three-phase boundary, but this is not necessarily so. Oxygen ions can then combine with the fuel to form a water molecule (in the present embodiment). The cathode (22) materials facilitate the reduction of the oxidant.

While typical fuel cells are arranged in tubular or planar structures, the anode (20), cathode (22), and electrolyte (24), as shown in the embodiment of FIG. 2, are arranged in an arch configuration. The arch configuration shown includes first and second angled members (25 and 27), and a generally planar member (29). Each of the anode (20), cathode (22), and electrolyte (24) include the first and second angled members (25 and 27) and the generally planar member (29). In the embodiment shown, the linear dimension of the anode (20) is approximately two to fifteen millimeters in length. In some embodiments, however, the linear dimension of the anode (20) is no more than fifteen millimeters, and, in other embodiments, the linear dimension is no more than five millimeters. However, the linear dimension of the anode (20) is not limited to the ranges listed above. The linear dimension of the anode (20) is preferably minimally sized such that substantially all the anode (20) is utilized to substantially consume or catalyze all of the fuel introduced to the anode (20) or fuel cell (40). However, "minimally sized" may also include some additional length as a margin. As mentioned above, many conventional anodes utilize only a small portion of their surface area to catalyze fuel, but the present embodiment is shortened to fully utilize the anode (20) and still substantially consume or catalyze all the fuel. The term "linear dimension" indicates the total length of the anode measured along a straight line from a first end (45) to a second end (47). The relatively small linear dimensions of the anode (20) facilitate more complete utilization of the anode (20) in catalyzing the fuel.

As shown in FIG. 2, the first and second angled members (25 and 27) extend from the manifold system (26). The manifold system (26) includes first and second layers (31 and 33) as shown in FIG. 2. However, in alternative embodiments, there may be only a first layer (31). Further, in some embodiments there may be three or more layers. First and second layers (31 and 33) are patternable substrate materials such as alumina, metal, ceramic, glass, photo-imageable polymer, or other materials. First and second layers (31 and 33) may be made of the same or different materials. The anode (20) and the substrate (33) define a volume in which the chemical reaction of the fuel cell takes place.

The use of patternable substrate materials for the first and second layers (31 and 33) advantageously facilitates the creation of a fluid communication path including a precise fuel flow path (35) and an exhaust flow path (37). To create the fuel flow path (35), the first layer (31) may be patterned in a first direction such as a direction substantially normal to the page at element number (35). The pattern in the first direction normal to the page may be variable or tapered, (i.e. progressively larger or smaller), to ensure an even distribution of fuel to each of the fuel cells (40). A tapered path may be sized such that the fluid pressure along the full distance of the path is substantially equal. The fuel flow path may also be patterned with spokes in a horizontal direction indicated by a first arrow (39) leading to the anodes (27). The second layer may be patterned in a second direction such as the substantially vertical direction indicated by a second arrow (41). The fuel flow pattern in the second direction (41) is in an opposite direction from the exhaust flow path (37) to facilitate fast and efficient removal of produced exhaust from the anode (20) area.

The fuel flow path (35) may also continue in the direction normal to the page as a fuel header supplying many fuel cells aligned behind the one shown. FIGS. 2A and 2B show from a top view perspective the first and second layers (31 and 33) according to one embodiment of the invention. The first layer (31) is shown in FIG. 2A and displays a number of fuel flow paths (35) in an array with a number of spokes (43) extending in the direction of the arrow (39) shown in FIG. 2. The spokes (43) lead to individual fuel cell anode segments (20, FIG. 2). In the present embodiment, there are seven spokes (43) for each of three fuel flow paths (35), but this number is exemplary and there may be a fewer or greater number of spokes depending on the application. The exhaust flow path (37) is also shown, with one flow path (37) paired with each spoke (43) to remove exhaust from the fuel cell anode (20, FIG. 2) soon after (within a few seconds or less) by-products are created.

FIG. 2B illustrates the second layer (33) in top view. As shown, the exhaust flow path (37) and the fuel flow path (41) are arrayed in a multi-cell configuration to match the pattern in first layer (31 ).

The patterns in the first and second layers (31 and 33) may be created in any of a number of ways, depending on the patternable material used. For example, the patterns may be created by drilling or etching to form fluid channels. In addition, some patternable materials may be sacrificial substrates that are photosensitive. Photosensitive materials such as photo-resistant polymers change in chemical composition when exposed to ultraviolet or other light sources. Therefore, such materials may be exposed to a select pattern of ultraviolet light, and then bathed in a solution known to dissolve either the exposed or unexposed pattern material (but not both) to leave the desired channels. Patterns may also be created in other ways known to those of skill in the art having the benefit of this disclosure.

Like the fuel flow path (35), the exhaust flow path (37) is also created by patterning the first and second layers (31 and 33). However, according to the present embodiment the exhaust flow path (37) is patterned in a single coaxial third direction (in the present embodiment substantially vertical) through both the first and second layers (31 and 33). The flow path (37) may be representative of an array of paths (See FIG. 2B) to fluidly communicate with other fuel cells located behind the one shown to form an exhaust header. The exhaust flow path (37) may be patterned in other directions in some embodiments as well. The exhaust flow path (37) advantageously provides an outlet in the opposite direction of the fuel inlet for quick removal of the exhaust generated in the anode segment (20) area during fuel cell (40) operation.

The fuel flow path (35), in combination with the exhaust flow path (37), advantageously provides for both the introduction of fresh fuel to the fuel cell (40) and the removal of spent fuel from the anode (20). This flow path arrangement of the fuel flow path (35) and the exhaust flow path (37) facilitates enhanced utilization of a catalytic anode surface (49, FIG. 2) by reducing competition between the fresh fuel and the exhaust for access to the catalyst surface (49, FIG. 2). Further, the anode (20) is substantially shorter than conventional planar anode lengths to more efficiently use the catalyst surface (49, FIG. 2). Accordingly, a fuel cell may include many smaller minimal anode segments (20) that are each more fully utilized to substantially consume all of the fuel as compared to conventional anodes that only utilize a fraction of their surface area to catalyze the fuel. Further, the short fuel path across the anode segments (20) provides for quick removal of any exhaust byproducts that may otherwise compete with the fresh fuel for access to the anode (20). The cathode (22), however, may be segmented in the same manner as the anode segments (20); it may be planar and shared by many anode segments (20).

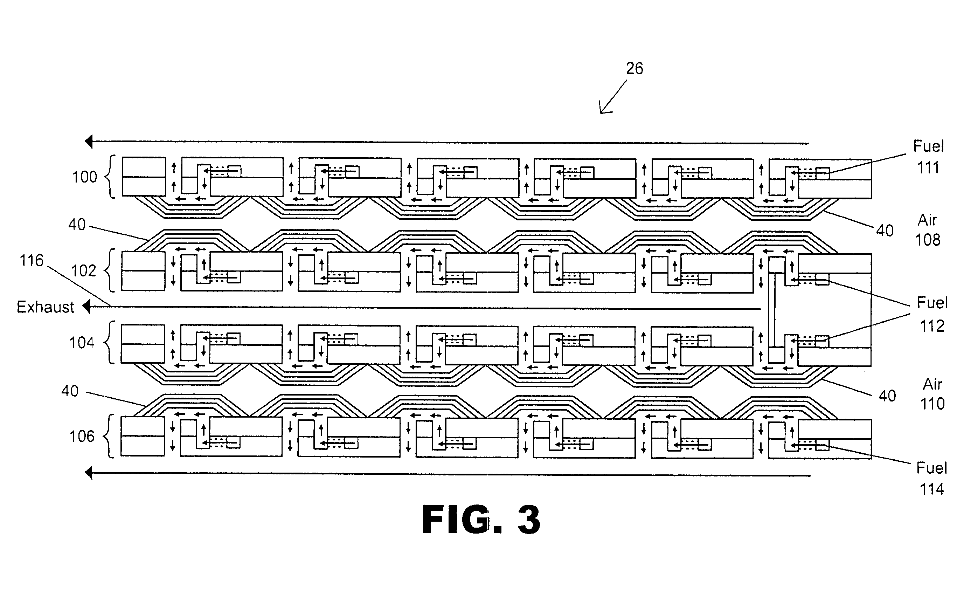

Because the fuel cell arrangement shown in FIG. 2 may only produce small current at low voltage, many of the fuel cells (40) may be stacked to meet higher power demands. Turning next to FIG. 3, a stack arrangement of many fuel cells (40) is shown according to another embodiment of the present invention. According to the embodiment of FIG. 3, four fuel cell rows (100/102/104/106) are arranged in sets of six cells each, for a total of twenty-four individual fuel cells (40). There may also be many additional layers of fuel cells behind those shown in a direction normal to the page to create an array of fuel cells. The arrangement of FIG. 3 is, however, exemplary in nature and it is not limited to four rows of six cells each. Further, it is not necessary that each row have an equal number of cells. Any other fuel cell arrangement calculated to meet certain power requirements may also be used with the fuel cells (40) structured in the arch configuration shown with the manifold system (26) in place.

According to the embodiment of FIG. 3, the manifold system (26) is arranged such that the first and second fuel cell rows (100 and 102) are adjacent to a common air header (108) that supplies oxygen to both of the fuel cell rows (100 and 102). A similar arrangement between the third and fourth fuel cell rows (104 and 106) allows the use of another common air header (110). Further, a common set of fuel headers (111) of the manifold system (26) may supply fuel to the first row (100) of fuel cells (40). Similar fuel headers (112 and 114) may supply fuel to each row of fuel cells. Each of the fuel cells (40) includes the fuel flow path (35) and exhaust flow path (37), shown in detail with reference to FIG. 2, to facilitate the manifolding of fuel sources and exhaust products. Accordingly, rows of fuel cells, such as the second and third rows (102 and 104) can be adjacently arranged as shown with a common exhaust header (116) to remove exhaust from the fuel cells (40). Each of the fuel cells (40) is fluidly connected to the manifold system (26) to remove exhaust therefrom.

It may appear that the arrangement shown in FIG. 3 suffers from a reduction in anode surface area as compared to conventional fuel cell planar structures. However, as discussed previously, conventional planar fuel cell structures experience under-utilization of anode catalytic surface area that results in inefficient operation of the fuel cell (40). The structure shown in FIG. 3 more than compensates for any lost anode surface area by gaining full or near-full utilization of the arched anode surface area (49, FIG. 2). As mentioned above, the enhanced utilization of the arched anode surface area (49, FIG. 2) is facilitated by a short linear dimension and the removal of exhaust from the anode (20) area to the exhaust manifold (116).

The operation of the fuel cells (40) can be described generaiiy as follows. The fuel (e.g., hydrocarbon, H₂, carbon monoxide, etc.) enters the fuel cells (40) from the fuel headers (111/112/114) via the fuel flow paths (35) patterned in each fuel cell manifold system (26). The fuel travels through the fuel flow paths (35) where it is introduced to the anodes (20). When the fuel comes into contact with the catalytic anode (20), ions, electrons, and by-products (exhaust) are formed. The electrons are conducted through the anode (20), where they make their way through an external circuit that may be providing power to do useful work (such as turning a motor or lighting a bulb) and return to the cathode (22) side of the fuel cells (40). According to the structure shown with the manifold system (26), as fuel is continually supplied to the fuel cell, the by-products exit the fuel cell (40) though the exhaust flow path (37) and to the exhaust header (116). Therefore, the fresh fuel supply is not required to compete with the exhaust for access to the anode (20).

Meanwhile, on the cathode (22) side of the fuel cell, molecular oxygen (O₂) is present in the air and is flowing through the air headers (108 and 110) of the manifold system (26). The cathode (22) may include one or more advanced catalytic materials such as doped cobaltites, manganites, and ferrites to facilitate the dissociation of oxygen molecules. As O₂ interacts with the catalytic cathode (22), it forms two oxygen ions, each having a strong negative charge. These oxygen ions pass through the solid oxide electrolyte (24) and oxidize the fuel at the anode (20). In the case of a hydrocarbon fuel source, the oxygen ions combine with the hydrocarbon to produce water, carbon dioxide, and electrons for the external circuit. In the case of H₂ as the fuel, the oxygen ions combine to form a water molecule and two electrons for the external circuit.

Solid oxide fuel cells typically operate at fairly high temperatures (above approximately 800° C), which allow them to have high reaction kinetics, and use a variety of fuels depending on the anode composition. Lower temperature operation is desired for applications that require rapid startup, where inexpensive containment structures, and temperature management is of concern. However, the fuel cell (40) structure shown may be used in other fuel cells as well, including, but not limited to PEM, AFC, PAFC, and MCFC.

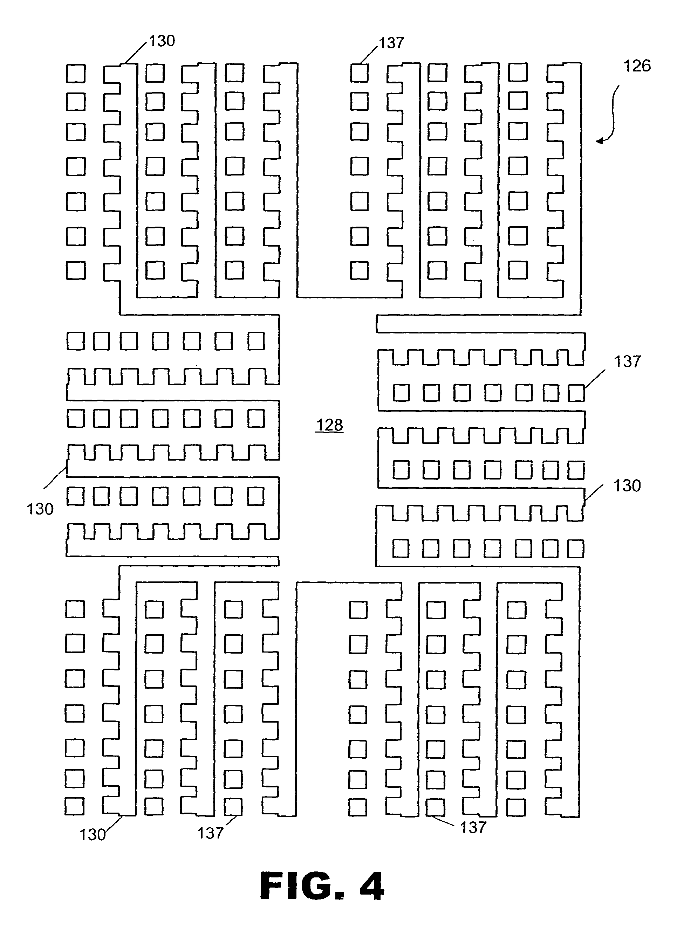

Turning next to FIG. 4, an alternative arrangement for the fuel cell manifolding system is shown. According to the embodiment of FIG. 4, there is a manifold system (126) arranged in a hub-and-spoke configuration. At a center of hub is a main fuel artery (128) with a plurality of spokes (130) extending therefrom. The spokes (130) and fluid paths may be arranged in the same manner as shown with reference to FIGs. 2A and 2B. The number of spokes attached to the fuel artery (128) may be any convenient number and is not limited to the configuration shown in FIG. 4. The hub-and-spoke manifold system (126) facilitates a single fuel supply line (e.g. the fuel artery (128)) for supplying fuel to an array of fuel cells, as well as providing fast and efficient removal of exhaust from the system (126) via exhaust flow paths (137).

The preceding description has been presented only to illustrate and describe the invention. It is not intended to be exhaustive or to limit the invention to any precise form disclosed. Many modifications and variations are possible in light of the above teaching.

The embodiments shown were chosen and described in order to best explain the principles of the invention and its practical application. The preceding description is intended to enable others skilled in the art to best utilize the invention in various embodiments and with various modifications as are suited to the particular use contemplated. It is intended that the scope of the invention be defined by the following claims.

## Claims

1. A fuel cell system comprising a fuel cell (40) having a plurality of segmented anodes (20), each segmented anode (20) measuring a minimal length sufficient to substantially consume or catalyze fuel introduced to the anode (20).

2. The system of claim 1, further comprising a fuel cell fuel supply manifold (26) patterned in a substrate (31/33), wherein fuel exhaust is removed from said segmented anodes (20) soon after the exhaust is created.

3. The system of claims 1 to 2, wherein said fuel cell fuel supply manifold (26) comprises a fuel path header (35) extending in a first direction.

4. The system of claims 1 to 3, wherein said fuel supply manifold (26) comprises a plurality of fuel supply spokes (43) extending from said fuel path header (35) and to individual segmented fuel cell anodes (20).

5. The system of claims 1 to 4, wherein said plurality of fuel supply spokes (43) extend to said individual segmented fuel cell anodes (20) in a second direction.

6. The system of claims 1 to 5, wherein said segmented fuel cell anodes (20) are no more than 15 mm in length.

7. A method of removing by-products from a fuel cell comprising:
flowing fuel into an arched fuel cell anode (20) in a first direction (41) and exhausting said by-products to an exhaust header in a second direction (37) immediately after fuel is substantially consumed or catalyzed.

8. The method of claim 7 wherein said first direction (41) is opposite of said second direction (37).

9. The method of claims 7 to 8, wherein said arched fuel cell anode (20) is of minimal length sufficient to consume or catalyze substantially all of the fuel.

10. The method of claims 7 to 9, wherein said minimal length is about two to fifteen mm.
